# EUROPÄISCHE PATENTANMELDUNG

(11) **EP 0 722 895 A1**
(43) Veröffentlichungstag der Anmeldung: **24.07.1996**
(21) Anmeldenummer: 95119679.9
(22) Anmeldetag: 14.12.1995
(51) Int. Cl.: B65G 13/075, B65G 39/06, B65G 1/08

(54) **Rolle als frei drehbare Transportrolle zum Einsatz in Rollenförderern**

(30) Priorität: 19.01.1995 DE 29500772 U
(71) Anmelder: NEDCON MAGAZIJNINRICHTING B.V., NL-7000 AA Doetinchem (NL)
(72) Erfinder: Hollander, Rudorf Richard, NL-7251 KC Vorden (NL)
(74) Vertreter: Stenger, Watzke & Ring Patentanwälte

(57) **Zusammenfassung**

Die Erfindung betrifft eine Rolle als frei drehbare Transportrolle zum Einsatz in Rollenförderern, mit einem auf einer Achse (8) frei drehbar gelagerten Grundkörper (6) sowie mindestens einem im Vergleich zu dem Grundkörper (6) weichen und walkfähigen Tragkörper (9), an dem sich außen die Lauffläche (10) der Rolle (5) befindet. Um eine Rolle als frei drehbare Transportrolle zum Einsatz in Rollenförderern zu schaffen, deren Bremswirkung weitgehend unabhängig von dem Gewicht der auf dem Rollenförderer aufliegenden Last ist, wird vorgeschlagen, daß der Tragkörper (9) als umlaufender Wulst ausgebildet ist, der sich nach außen hin verjüngt.

## Beschreibung

Die Erfindung betrifft eine Rolle als frei drehbare Transportrolle zum Einsatz in Rollenförderern, mit einem auf einer Achse frei drehbar gelagerten Grundkörper sowie mindestens einem im Vergleich zu dem Grundkörper weichen und walkfähigen Tragkörper, an dem sich außen die Lauffläche der Rolle befindet.

In der Lagertechnik und insbesondere in der Hochregallagertechnik erfolgt der Transport beladener Industriepaletten mittels Rollenförderern, die als Rollbahnen mit einer Vielzahl frei drehbar gelagerter Rollen ausgebildet sind. Auf derartigen Rollbahnen können die zu transportierenden Paletten entlanglaufen, bis sie an einem Anschlag oder an einer bereits stehenden Palette zur Anlage kommen. Nachdem die Paletten die Endposition an der abschüssigsten Stelle der Rollbahn erreicht haben, können sie von dort mittels geeigneter Fördergeräte entnommen werden.

Bei der Planung von Rollenförderern ist darauf zu achten, daß die zu transportierenden Paletten keine zu hohen Laufgeschwindigkeiten erreichen. Da der Transport der Paletten ausschließlich aufgrund der Neigung der Rollbahn und hervorgerufen durch die Schwerkraft der beladenen Palette selbst erfolgt, führt eine zu große Neigung der Rollbahn dazu, daß sich die Geschwindigkeit der Palette über das zulässige Maß hinaus erhöht. Wird andererseits die Neigung der Rollbahn zu gering eingestellt, ist nicht in allen Fällen gewährleistet, daß die Paletten darauf sicher entlanglaufen.

Um bei geneigten Rollbahnen die gewünschte Bremswirkung auf die Palette auszuüben, werden derartige Rollbahnen mit sogenannten Bremsrollen bestückt. Diese zeichnen sich dadurch aus, daß sie über eine weiche, walkfähige Oberfläche verfügen. Im Bereich der aufliegenden Last wird die Lauffläche der Rolle elastisch eingedrückt, wobei das insoweit verdrängte Material der Laufschicht in Bewegungsrichtung ausweicht. Dieses "Walken" führt zu einer nicht unerheblichen Energieumwandlung von kinetischer Energie in Wärmeenergie, wobei die so umgewandelte kinetische Energie dazu führt, daß die auf den Rollen entlanglaufenden Gegenstände abgebremst werden.

Es hat sich allerdings herausgestellt, daß die Bremswirkung sehr stark von dem Gewicht der entlangrollenden Palette abhängt. So führen schwer beladene Paletten zu einem großen Druck auf die Rollen und damit zu einem Abbau der kinetischen Energie, wohingegen eine nur leicht beladene Palette zu keinem nennenswerten Stauchen der Lauffläche der Rollen führt, so daß die Bremswirkung zu gering ist, und solche Paletten eine zu hohe Laufgeschwindigkeit erreichen.

Der Erfindung liegt die **Aufgabe** zugrunde, eine Rolle als frei drehbare Transportrolle zum Einsatz in Rollenförderern zu schaffen, deren Bremswirkung weitgehend unabhängig von dem Gewicht der auf dem Rollenförderer aufliegenden Last ist.

Zur **Lösung** dieser Aufgabe wird bei einer Rolle der eingangs genannten Art vorgeschlagen, daß der Tragkörper als umlaufender Wulst ausgebildet ist, der sich nach außen hin verjüngt.

Durch die Gestaltung des Tragkörpers als umlaufender Wulst wird erreicht, daß auch ein relativ leichter Druck, wie er durch eine nur gering beladene Palette erzeugt wird, bereits zu einem Stauchen des Materials des Tragkörpers führt, so daß eine solche Rolle auch bei geringer Belastung in der Lage ist, kinetische Energie in Wärmeenergie umzuwandeln, und damit eine Bremswirkung auszuüben. Andererseits verlagert sich bei erhöhter Belastung die Materialstauchung bis in die verbreiterte Basis der Wulst, so daß auch bei erhöhtem Gewichtsdruck die gewünschte Bremswirkung der Rolle erreicht wird.

Von besonderem Vorteil ist es, wenn sich der Wulst nach außen hin progressiv verjüngt, wobei seine Flanken konkav gestaltet sind. Durch eine solche Optimierung läßt sich die Bremswirkung der Rolle so beeinflussen, daß diese unabhängig von dem Gewicht der aufliegenden Palette zu derselben Bremswirkung führt, d.h. sowohl leichte, als auch schwere Paletten gleiten mit vergleichbarer Geschwindigkeit über einen entsprechend bestückten Rollenförderer hinweg.

Schließlich wird mit der Erfindung vorgeschlagen, daß Grundkörper und Tragkörper als gemeinsam extrudiertes, einstückiges Bauteil geformt sind. Eine solche Rolle läßt sich in einem Arbeitsgang besonders einfach und damit kostengünstig herstellen.

Weitere Einzelheiten der Erfindung werden nachfolgend anhand der Zeichnung erläutert. Darin zeigen:
- Fig. 1: in einer Seitenansicht einen Rollenförderer mit einer darauf aufliegenden beladenen Industriepalette,
- Fig. 2: einen Schnitt durch eine in dem Rollenförderer gemäß Fig. 1 verwendete Rolle und
- Fig. 3: einen vergrößerten Schnitt durch die Rolle gemäß Fig. 2.

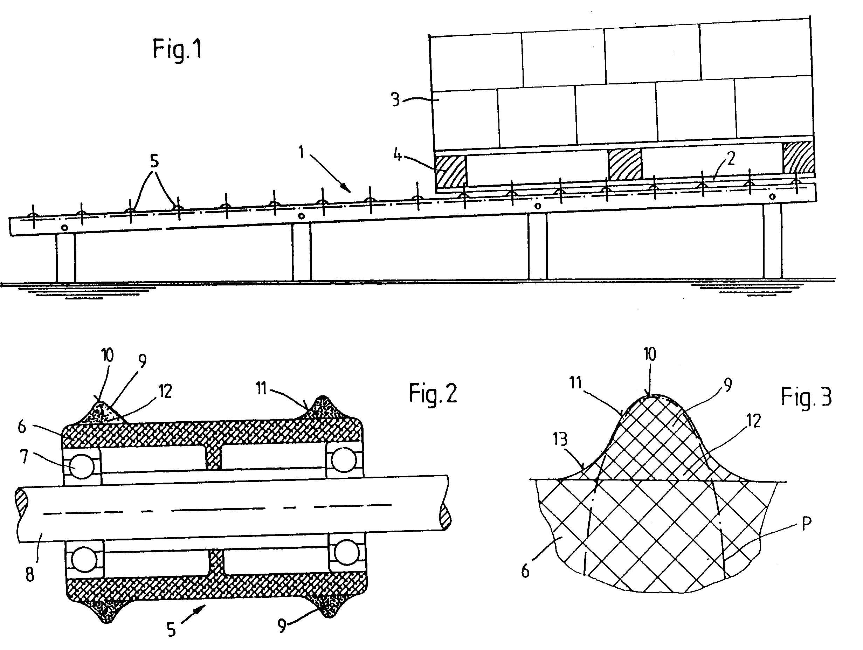

Der in Fig. 1 dargestellte Rollenförderer setzt sich aus insgesamt drei parallel zueinander verlaufenden Rollbahnen 1 zusammen, die eine geringe Neigung aufweisen. Jede der drei Rollbahnen 1 unterstützt eine der drei Kufen 2 einer mit Waren 3 beladenen Palette 4. Jede der Rollbahnen 1 ist mit einer Vielzahl freilaufender Rollen 5 bestückt, so daß sich die Palette 4 infolge der geringen Neigung der Rollbahnen 1 selbsttätig entlang des Rollenförderers bewegt.

Der Querschnitt durch die Rolle 5 gemäß Fig. 4 zeigt, daß diese aus einem zylindrischen Grundkörper 6 besteht, der über Wälzlager 7 auf einer Achse 8 abgestützt ist. Der Grundkörper 6 kann aus Kunststoff bestehen. An beiden Enden sind auf dem Grundkörper 6 Tragkörper 9 ausgebildet, deren äußere Fläche die Lauffläche 10 bildet, auf der die Palette 4 mit ihren Kufen 2 entlangläuft.

Jeder der beim Ausführungsbeispiel zweifach vorhandenen Tragkörper 9 besteht aus einem um den Grundkörper 6 umlaufenden Wulst, der sich nach außen hin verjüngt. Die Flanken 11 dieser Verjüngung sind in ihrem äußeren Teil nahe der Lauffläche 10 parabolisch in Gestalt der in Fig. 3 dargestellten Parabel P geformt. Jeder Tragkörper 9 besteht aus einem elastisch verformbaren, walkfähigen Material, welches weicher ist als das Material des Grundkörpers 6.

Grundkörper 6 und Tragkörper 9 können in einem gemeinsamen Extrusionsvorgang hergestellt werden, wobei die für den Grundkörper 6 verwendete Mischung, z.B. Gummimischung, von härterer Konsistenz ist als die für die wulstförmigen Tragkörper 9 verwendete Mischung.

Im Betrieb führt der von der Palette 4 erzeugte Gewichtsdruck zu einer Verformung durch Materialverdrängung des jeweils belasteten Teils der wulstförmigen Tragkörper 9, wohingegen der Grundkörper 6 keine nennenswerte Verformung erfährt. Ein geringer Gewichtdruck der Palette 4 führt zu einer geringen Verformung des Tragkörpers 9 ausschließlich im Bereich seiner Lauffläche 10, während eine starke Gewichtsbelastung durch eine schwere Palette 4 zu einem verstärkten Walken des Tragkörpers 9 bis in dessen Basis 12 führt. Infolge der parabolisch verjüngten Querschnittsgestaltung des wulstförmigen Tragkörpers 9 im Bereich nahe der Lauffläche 10 mit sich anschließenden Rundungen 13 im Bereich der Wurzel 12 des Wulstes ist die Bremswirkung auf die Palette 4 im wesentlichen stets dieselbe, so daß sowohl leichte als auch schwere Paletten 4 mit vergleichbarer Geschwindigkeit entlang des Rollenförderers gleiten.

### Bezugszeichenliste

- 1: Rollbahn
- 2: Kufe
- 3: Ware
- 4: Palette
- 5: Rolle
- 6: Grundkörper
- 7: Wälzlager
- 8: Achse
- 9: Tragkörper
- 10: Lauffläche
- 11: Flanke des Wulstes
- 12: Wurzel des Wulstes
- 13: Rundung
- P: Parabel

## Patentansprüche

1. Rolle als frei drehbare Transportrolle zum Einsatz in Rollenförderern, mit einem auf einer Achse (8) frei drehbar gelagerten Grundkörper (6) sowie mindestens einem im Vergleich zu dem Grundkörper (6) weichen und walkfähigen Tragkörper (9), an dem sich außen die Lauffläche (10) der Rolle (5) befindet,
**dadurch gekennzeichnet,**
daß der Tragkörper (9) als umlaufender Wulst ausgebildet ist, der sich nach außen hin verjüngt.

2. Rolle nach Anspruch 1, dadurch gekennzeichnet, daß sich der Wulst nach außen hin in Gestalt einer Parabel (P) verjüngt.

3. Rolle nach Anspruch 1 oder Anspruch 2, dadurch gekennzeichnet, daß Grundkörper (6) und Tragkörper (9) als gemeinsam extrudiertes, einstückiges Bauteil geformt sind.
